# DEMANDE DE BREVET EUROPEEN

(11) **EP 1 338 501 A1**
(43) Date de publication de la demande: **27.08.2003**
(21) Numéro de dépôt: 03290372.6
(22) Date de dépôt: 17.02.2003
(51) Int. Cl.: B62M 3/08

(54) **Pédale automatique de cycle**

(30) Priorité: 21.02.2002 FR 0202192
(71) Demandeur: Crank Brothers, Laguna Beach, California 92651 (US)
(72) Inventeur: Hermansen, Frank, Laguna Beach, CA 92651 (US); Fournier, Thierry, 06570 Saint-Paul (FR); Winefordner, Carl, Laguna Beach, CA 92651 (US)
(74) Mandataire: Laget, Jean-Loup

(57) **Abrégé**

La pédale comporte un corps de pédale (1) monté rotatif sur un axe de pédale (2), le corps de pédale (1) étant pourvu de moyens de fixation (8, 9) détachable d'une plaque fixée sous une chaussure venant s'appuyer contre des appuis (21) sur le corps de pédale (1). Les moyens de fixation comportent une première paire d'arceaux (8) solidaire du corps de pédale (1), et une deuxième paire d'arceaux (9) montée rotative par rapport au corps de pédale (1), les paires d'arceaux (8, 9) étant maintenues dans une position de fixation par un ressort (12) qui permet d'augmenter momentanément la distance entre deux arceaux adjacents (8, 9) pour y fixer la plaque. La pédale comporte une cage (22) montée rotative sur l'axe de pédale (2) autour des arceaux et présentant des appuis auxiliaires (23, 24) s'étendant en regard des arceaux, de part et d'autre de l'axe de pédale (2).

## Description

La présente invention concerne une pédale automatique pour cycle, en particulier pour un cycle de tout terrain (VTT), mais qui peut également être utilisée sur un cycle de route.

La notion de "automatique" est liée au fait que la chaussure porte un organe d'accrochage qui est destiné à déclencher une fixation à mains libres en sollicitant tout simplement cet organe d'accrochage contre des moyens de fixation prévus sur la pédale.

Toute pédale automatique comporte comme chaque pédale classique un corps de pédale monté rotatif sur un axe de pédale apte à être relié à une manivelle de pédalier. Elle devient automatique par le fait que son corps de pédale est ainsi pourvu de moyens de fixation détachable d'un organe d'accrochage constitué par une plaque métallique fixée sous une chaussure de bicyclette. Ces pédales diffèrent les unes des autres essentiellement par la mise en oeuvre des moyens de fixation utilisés.

Une pédale extrêmement simplifiée et destinée avant tout pour un cycle de tout terrain est connue du brevet US 6 205 885. Les figures 1 à 4 de la présente demande de brevet montrent une pédale et une plaque de fixation connues qui en effet constituent une variante de la pédale décrite dans ce brevet. Cette pédale sera succinctement décrite ci-dessous.

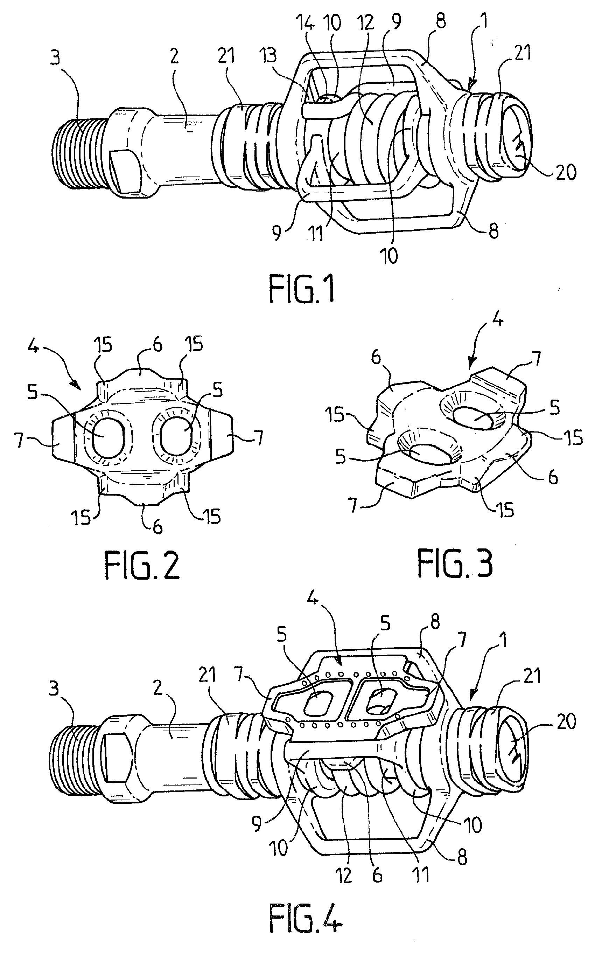

Le pédale illustrée sur les figures 1 et 4 comporte un corps de pédale 1 monté rotatif sur un axe de pédale 2 comportant à son extrémité libre un filetage 3 pour sa fixation sur une manivelle de pédalier (non représentée). Le corps de pédale 1 est pourvu de moyens de fixation détachable d'un organe d'accrochage constitué par une plaque 4 montrée séparément sur les figures 2 et 3, la figure 2 étant une vue de dessous dans le plan et la figure 3 étant une vue de dessous en perpective.

La plaque 4 est pourvue de deux trous de fixation 5 de la plaque dans la semelle d'une chaussure de bicyclette (non représentée). Ces trous 5 sont oblongs de l'avant vers l'arrière pour permettre un certain ajustage sous la chaussure. La plaque comporte à l'avant respectivement à l'arrière un bec 6 destiné à coopérer avec un moyen de fixation respectif de la plaque 4 sur le corps de pédale 1 (voir figure 4).

Afin d'améliorer la stabilité de la plaque 4 lors du pédalage, celle-ci est avantageusement pourvue d'ailes latérales 7 venant appuyer contre le corps de pédale.

Les moyens de fixation de la plaque 4 contre le corps de pédale 1 comportent une paire d'arceaux 8 solidaires du corps de pédale 1. Dans les figures, cette paire d'arceaux 8 est en une seule pièce avec le corps de pédale. Les arceaux 8 s'étendent radialement et sont disposés diamétralement opposés sur le corps de pédale.

Cette paire d'arceaux 8 constitue une première paire, alors qu'une deuxième paire d'arceaux 9 d'extension radiale et de largeur réduite s'étend à l'intérieur de la première paire d'arceaux 8. Les extrémités des arceaux 9 sont fixées à deux anneaux 10 enfilés sur un élément tubulaire 11 faisant partie du corps de pédale 1 et qui est à son tour enfilé sur l'axe de pédale 2. Les arceaux 9 sont également diamétralement opposés et sont de préférence effectués en une seule pièce avec les anneaux 10.

Les arceaux 8 de la première paire sont maintenus en position par rapport aux arceaux 9 de la deuxième paire par un moyen élastique sous forme d'un ressort hélicoïdal 12 qui est enfilé sur l'élément tubulaire 11, entre les arceaux 9 de la deuxième paire d'arceaux. Les extrémités du ressort 12 prennent appui sur des portées 13, 14 associées à la première paire d'arceaux 8, respectivement à la deuxième paire d'arceaux 9, afin de définir une distance prédéterminée entre deux arceaux adjacents 8, 9. Dans l'exemple illustré, cette distance est régulière, ce qui permet l'obtention de quatre plans de fixation de la plaque 4 sur le corps de pédale 1.

Pour la fixation de la plaque 4 entre deux arceaux adjacents 8, 9, cette distance peut être momentanément augmentée, à l'encontre de l'effet du ressort 12, tout simplement en plaçant le bec avant 6 sous l'arceau qui se trouve le plus en avant, et en pressant le bec arrière de la plaque contre l'autre arceau, ce qui va séparer davantage les arceaux et permettre la prise de la plaque entre les deux arceaux.

Pour dégager la plaque 4 de sa prise entre les arceaux 8, 9, il suffit d'effectuer une rotation du pied vers l'extérieur, ce qui provoquera la séparation des arceaux à l'aide de surfaces formant cames 15 sur la plaque.

Les seuls points d'appui pour la semelle sur le corps de pédale 1 se trouvent de part et d'autre des arceaux 8 de la première paire d'arceaux. Sur la pédale décrite dans le US 6 205 885, ces points d'appui sont constitués par une entretoise d'un coté et du corps de pédale cylindrique de l'autre côté.

Bien entendu, un tel agencement ne donne pratiquement pas de surface d'appui pour la semelle sur le corps de pédale, ce qui constitue un inconvénient lors du pédalage. La pédale illustrée sur les figures 1 et 4 de la présente demande de brevet apporte une certaine amélioration à cet égard dans la mesure où les surfaces d'appui de part et d'autre de la première paire d'arceaux 8 sont sensiblement planes et parallèles au plan d'appui correspondant de la plaque 4 lorsque celle-ci se trouve en prise entre deux arceaux voisins 8, 9. Dans cette pédale, quatre plans d'appui pour la plaque 4 sont prévus et le corps de pédale présente par conséquent une section globalement carrée.

Cependant, ces surfaces d'appui pour la semelle sont toujours extrêmement réduites et il n'y pas de surfaces d'appui déportée vers l'avant ou en retrait vers l'arrière. Au contraire, la semelle repose sur une surface qui n'est pas beaucoup plus grande que l'axe de pédale lui-même. L'inconvénient de cet agencement réside toujours dans le fait que malgré cette dernière amélioration, les surfaces d'appui de la semelle sur la pédale sont trop limitées pour permettre un pédalage équilibré.

En plus, cette pédale présente dans son ensemble un aspect si réduit qu'elle n'offre aucun repère instinctif pour la pose du pied du cycliste sur la pédale pour enclencher la plaque sous la semelle entre les moyens d'accrochage prévus sur la pédale.

L'invention a pour but de remédier à ces inconvénients en proposant une pédale qui offre de véritables surfaces d'appui à la semelle de la chaussure de cycliste et qui constitue en même temps un repère pour la pose du pied sur la pédale.

L'objet de l'invention est une pédale automatique de cycle comportant un corps de pédale monté rotatif sur un axe de pédale apte à être relié à une manivelle de pédalier, ledit corps de pédale étant pourvu de moyens de fixation détachable d'un organe d'accrochage fixé sous une chaussure de bicyclette apte à venir appuyer contre des surfaces d'appui prévues sur ledit corps de pédalé, lesdits moyens de fixation comportant une première paire d'arceaux solidaire du corps de pédale, et une deuxième paire d'arceaux montée rotative par rapport au corps de pédale, les arceaux de chaque paire d'arceaux s'étendant radialement tout en étant diamétralement opposés de part et d'autre de l'axe de pédale, les paires d'arceaux étant maintenues dans une position relative de fixation de l'organe d'accrochage par un moyen élastique prenant appui sur des portées associées à une paire d'arceaux respective afin de définir une distance prédéterminée entre deux arceaux adjacents, ledit moyen élastique permettant, à l'encontre de son effet, d'augmenter momentanément ladite distance entre deux arceaux adjacents pour y fixer l'organe d'accrochage, caractérisée par le fait qu'elle comporte une cage montée rotative sur l'axe de pédale autour desdits arceaux et présentant des surfaces d'appui auxiliaires pour ladite chaussure de bicyclette, lesdites surfaces d'appui auxiliaires s'étendant en regard des arceaux de part et d'autre de l'axe de pédale.

Selon d'autres caractéristiques de l'invention :
- ladite cage comporte une pièce fermée sur elle-même et s'étendant sensiblement symétriquement de part et d'autre dudit axe de pédale ;
- ladite cage enferme globalement l'ensemble dudit corps de pédale ;
- lesdites surfaces d'appui auxiliaires sont disposées sur deux rebords opposés d'un même côté de ladite cage ;
- lesdites surfaces d'appui auxiliaires se trouvent sur des parties surélevées de la cage ;
- lorsque ladite chaussure de bicyclette est posée sur la pédale et l'organe d'accrochage est en place entre lesdits arceaux, lesdites surfaces d'appui auxiliaires se trouvent surélevées par rapport auxdites surfaces d'appui sur ledit corps de pédale ;
- ladite cage comporte des évidements sur des côtés latéraux ;
- ladite cage est sur une surface inférieure recouverte par un élément de protection en forme de sabot ;
- le fond dudit sabot présente un trou central ;
- ladite première paire d'arceaux est en outre solidaire en rotation de ladite cage.

D'autres caractéristiques et avantages de l'invention ressortiront de la description qui va suivre de quelques modes de réalisation non limitatifs de l'invention, en référence aux figures annexées dans lesquelles :
- la figure 1 est une vue en perspective de la pédale connue décrite dans l'introduction ;
- les figures 2 et 3 sont des vues d'en dessous d'une plaque de fixation associée à la pédale de la figure 1, la figure 2 étant une vue dans le plan et la figure 3 une vue en perspective ;
- la figure 4 est une vue en perspective de la pédale de la figure 1 pourvue de la plaque de fixation des figures 2 et 3 ;
- la figure 5 est une vue éclatée en perspective d'une pédale selon un premier mode de réalisation de l'invention ;
- la figure 6 est une vue dans le plan, partiellement en coupe longitudinale, de la pédale de la figure 5, après assemblage ;
- la figure 7 est une vue en perspective de la pédale des figures 5 et 6 ;
- la figure 8 est une vue éclatée en perspective montrant quelques éléments essentiels d'une pédale selon un deuxième mode de réalisation de l'invention ;
- la figure 9 est une vue dans le plan d'une pédale selon le deuxième mode de réalisation ;
- la figure 10 est une vue en perspective de la pédale de la figure 9 ;
- la figure 11 est une vue éclatée en perspective montrant quelques éléments essentiels d'une pédale selon un troisième mode de réalisation de l'invention ;
- la figure 12 est une vue dans le plan d'une pédale selon une troisième mode de réalisation de l'invention ; et
- la figure 13 est une vue en perspective de la pédale de la figure 12.

Dans les figures, les éléments identiques ou équivalents porteront les mêmes signes de référence.

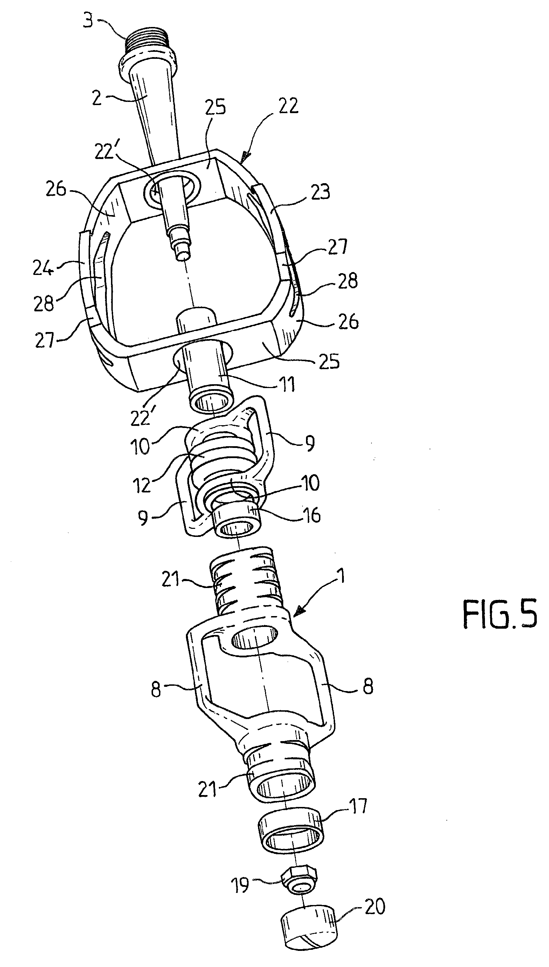

Un premier mode de réalisation sera maintenant décrit en référence aux figures 5 à 7.

La pédale comporte un corps de pédale 1 monté rotatif sur un axe de pédale 2 pourvu à l'une de ses extrémités d'un filetage 3 devant être relié à un pédalier (non représenté). La pédale est pourvue de moyens de fixation détachable d'un organe d'accrochage tel que la plaque 4 montrée sur les figures 1 à 3.

Ces moyens de fixation comportent une première paire d'arceaux 8 d'extension radiale fixés diamétralement opposés sur le corps de pédale 1 de manière à tourner avec celui-ci sur l'axe de pédale. Avantageusement, les arceaux 8 forment une seule pièce avec le corps de pédale (voir figure 5). Une deuxième paire d'arceaux 9 se trouve entre les arceaux 8 de la première paire d'arceaux 8. Les arceaux 9 sont fixés diamétralement opposés sur deux anneaux 10 montés rotatifs sur un élément tubulaire 11 enfilé sur l'axe de pédale 1 et faisant partie du corps de pédale. Les arceaux 9 et les anneaux 10 sont également de préférence en une seule pièce.

Les paires d'arceaux 8, 9 sont maintenues dans une position relative de fixation de la plaque d'accrochage 4 à l'aide d'un moyen élastique sous forme d'un ressort hélicoïdal 12 prenant appui sur des portées 13 associées à la première paire d'arceaux 8 et sur des portées 14 associées à la deuxième paire d'arceaux 9. Les portées 13 sont dans l'exemple illustré constituées par des saillies sur la face intérieure des arceaux, alors que les portées 14 sont constituées par des encoches sur la périphérie des anneaux 10.

Le ressort 12 définit ainsi grâce à l'emplacement des portées 13, 14, une distance prédéterminée entre deux arceaux adjacents 8, 9, tout en permettant d'augmenter cette distance, à l'encontre de son effet, pour fixer la plaque 4 entre deux arceaux adjacents et en ramenant les arceaux vers leur position de fixation lorsque la plaque se trouve en place entre eux.

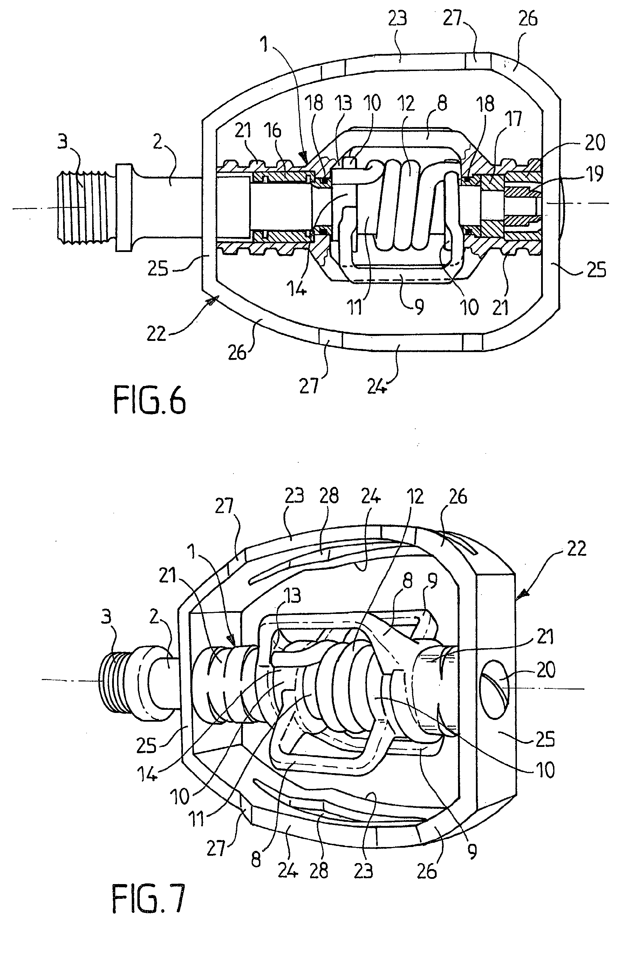

La vue partiellement en coupe de la figure 6 montre que l'axe de pédale 2 est monté rotatif dans deux roulements, à savoir un roulement à aiguilles étanche 16 et un roulement à billes 17, ce dernier étant disposé à proximité de l'extrémité libre de l'axe de pédale. Les roulements sont protégés par plusieurs joints d'étanchéité 18 disposés autour de l'axe de pédale dans le corps de pédale 1. Le corps de pédale 1 est retenu axialement sur l'axe de pédale 2 par un écrou 19 vissé sur l'extrémité libre de l'axe de pédale 2. Un bouchon de protection et d'étanchéité 20 est inséré à l'extrémité du corps de pédale autour de l'écrou 19.

Le corps de pédale comporte sur son pourtour des surfaces d'appui 21 pour la semelle d'une chaussure de cycliste (non représentée) dans laquelle la plaque 4 est encastrée. Ces surfaces d'appui s'étendent axialement de part et d'autre des arceaux 8, 9, tout près de l'axe de pédale 2.

Selon l'invention, une cage 22 est montée libre en rotation sur l'axe de pédale 2 autour des arceaux 8, 9. La cage est pourvue de surfaces d'appui auxiliaires 23, 24 s'étendant en regard des arceaux 8, 9 de part et d'autre de l'axe de pédale 2. L'une des surfaces d'appui, 23, constitue une surface d'appui avant, alors que l'autre, 24, constitue une surface d'appui arrière.

Les surfaces d'appui 23, 24 sont disposées sur une pièce de la cage qui est une pièce fermée sur elle-même qui s'étend sensiblement symétriquement de part et d'autre de l'axe du pédale. Elle est dans l'exemple illustré sur les figures 5 à 7 composée de deux éléments radiaux 25 disposés aux extrémités du corps de pédale 1 et reliés l'un à l'autre par des éléments courbes 26 de sorte que la cage enferme globalement l'ensemble du corps de pédale 1. Les éléments radiaux 25 sont par ailleurs pourvus de trou de passage 22' pour l'axe de pédale 2.

Les moyens de fixation de la pédale illustrée sur les figures 5 à 7 offrent quatre plans de fixation et la cage 22 comporte des surfaces d'appui auxiliaires disposées sur deux rebords opposés d'un même côté de la cage (voir figure 7) pour que des surfaces d'appui auxiliaires soient toujours présentées vers le haut en regard de la semelle de la chaussure de cycliste lors de l'enclenchement de la plaque d'accrochage sur les arceaux de fixation 8, 9.

Pour répartir l'effort de poussée du pied du cycliste de manière optimale sur les surfaces d'appui différentes 21, 23, 24 de la pédale, les surfaces d'appui auxiliaires 23, 24 se trouvent surélevées par rapport aux surfaces d'appui 21 sur le corps de pédale 1 pour prendre en considération le galbe de la semelle de la chaussure de bicyclette.

Pour alléger la cage et ainsi la pédale, les surfaces d'appui auxiliaires 23, 24 sont définies sur des parties surélevées 27 de la cage 22. Pour alléger davantage la cage, celle-ci comporte des évidements 28 sous forme de fentes sur ses côtés latéraux, entre les surfaces d'appui auxiliaires opposées.

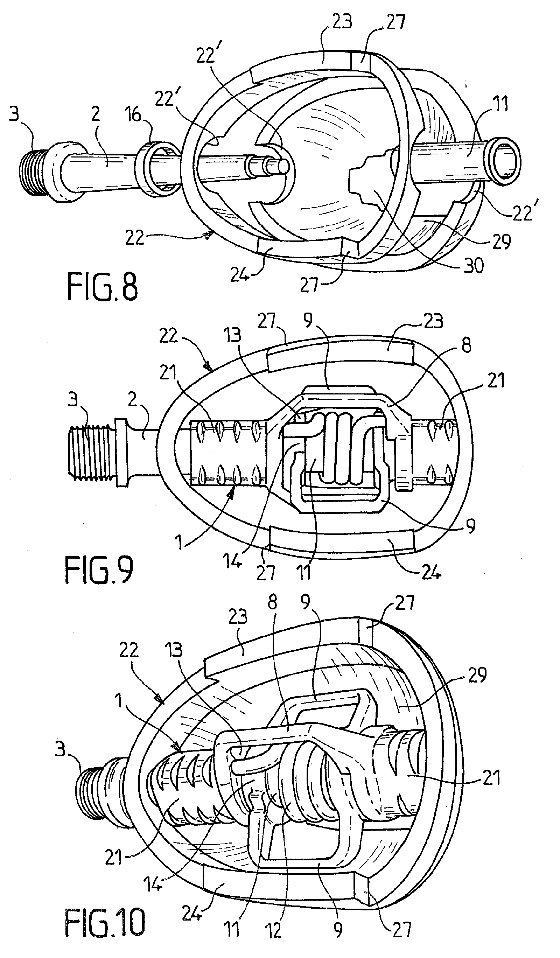

Le mode de réalisation illustré sur les figures 8 à 10 diffère de celui qui vient d'être décrit en référence aux figures 5 à 7 par le fait que la cage 22 est sur une surface inférieure recouverte par un élément de protection en forme de sabot 29. Par son poids, ce sabot se trouve toujours dirigé vers le bas et les surfaces d'appui auxiliaires 23, 24 se trouvent uniquement sur une face supérieure de la cage 22.

Le sabot 29 peut être fait en une seule pièce avec la cage 22, ou bien par un élément séparé fixé sur la surface inférieure de la cage, comme cela est illustré sur les figures. Dans ce dernier cas, le trou de passage 22' peut également être en deux parties semi-circulaires disposées en face l'une de l'autre sur la face inférieure de la cage, respectivement sur le rebord supérieur du sabot.

Afin de permettre à la boue qui éventuellement tombe à l'intérieur du sabot lors du pédalage, surtout lorsque les pédales équipent un cycle de tout terrain, le fond du sabot présente un trou central d'évacuation 30.

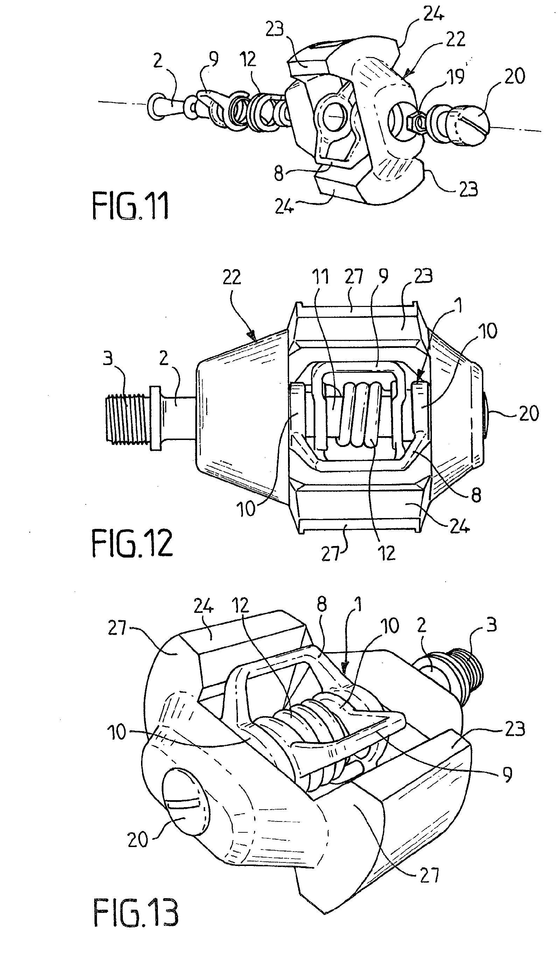

Un troisième mode de réalisation de la pédale selon l'invention est illustré sur les figures 11 à 13. Ce mode de réalisation diffère de celui qui vient d'être décrit en référence aux figures 5 à 7 par le fait que la première paire d'arceaux 8 est rendue solidaire en rotation de la cage 22. Cela peut être obtenu par n'importe quel moyen approprié, tel que collage, rivetage, soudage etc.

Bien entendu, dans ce troisième mode de réalisation, le nombre de plans de fixation de la plaque se trouve réduit à deux, c'est-à-dire un plan de chaque côté de la cage 22.

Dans tous les modes de réalisation, on obtient ainsi, grâce à la cage selon l'invention, des surfaces d'appui auxiliaires déportées vers l'avant et vers l'arrière par rapport au corps de pédale et qui contribuent à stabiliser la pédale lors du pédalage, et qui offre en plus un excellent repère visuel au cycliste pour l'accrochage de sa chaussure sur la pédale.

Il est évident que l'invention n'est pas limitée aux exemples illustrés et décrits, mais peut être appliquée à chaque pédale comportant une cage telle que décrite ci-dessus.

## Revendications

1. Pédale automatique de cycle comportant un corps de pédale (1) monté rotatif sur un axe de pédale (2) apte à être relié à une manivelle de pédalier, ledit corps de pédale (1) étant pourvu de moyens de fixation (8, 9) détachable d'un organe d'accrochage (4) fixé sous une chaussure de bicyclette apte à venir appuyer contre des surfaces d'appui (21) prévues sur ledit corps de pédale (1), lesdits moyens de fixation comportant une première paire d'arceaux (8) solidaire du corps de pédale (1), et une deuxième paire d'arceaux (9) montée rotative par rapport au corps de pédale (1), les arceaux de chaque paire d'arceaux (8, 9) s'étendant radialement tout en étant diamétralement opposés de part et d'autre de l'axe de pédale (2), les paires d'arceaux (8, 9) étant maintenues dans une position relative de fixation de l'organe d'accrochage (4) par un moyen élastique (12) prenant appui sur des portées (13, 14) associées à une paire d'arceaux respective (8, 9) afin de définir une distance prédéterminée entre deux arceaux adjacents (8, 9), ledit moyen élastique (12) permettant, à l'encontre de son effet, d'augmenter momentanément ladite distance entre deux arceaux adjacents (8, 9) pour y fixer l'organe d'accrochage (4), **caractérisée par le fait qu'**elle comporte une cage (22) montée rotative sur l'axe de pédale (2) autour desdits arceaux (8, 9) et présentant des surfaces d'appui auxiliaires (23, 24) pour ladite chaussure de bicyclette, lesdites surfaces d'appui auxiliaires (23, 24) s'étendant en regard des arceaux (8, 9) de part et d'autre de l'axe de pédale (2).

2. Pédale selon la revendication 1, **caractérisée par le fait que** ladite cage (22) comporte une pièce fermée sur elle-même et s'étendant sensiblement symétriquement de part et d'autre dudit axe de pédale (2).

3. Pédale selon l'une quelconque des revendications précédentes, **caractérisée par le fait que** ladite cage (22) enferme globalement l'ensemble dudit corps de pédale (1).

4. Pédale selon l'une quelconque des revendications précédentes, **caractérisée par le fait que** lesdites surfaces d'appui auxiliaires (23, 24) sont disposées sur deux rebords opposés d'un même côté de ladite cage (22).

5. Pédale selon l'une quelconque des revendications précédentes, **caractérisée par le fait que** lesdites surfaces d'appui auxiliaires (23, 24) se trouvent sur des parties surélevées de la cage (22).

6. Pédale selon l'une quelconque des revendications précédentes, **caractérisée par le fait que** lorsque ladite chaussure de bicyclette est posée sur la pédale et l'organe d'accrochage (4) est en place entre lesdits arceaux (8, 9), lesdites surfaces d'appui auxiliaires (23, 24) se trouvent surélevées par rapport auxdites surfaces d'appui (21) sur ledit corps de pédale (1).

7. Pédale selon l'une quelconque des revendications précédentes, **caractérisée par le fait que** ladite cage (22) comporte des évidements (28) sur des côtés latéraux.

8. Pédale selon l'une quelconque des revendications 1 à 3, 5 à 7, **caractérisée par le fait que** ladite cage (22) est sur une surface inférieure recouverte par un élément de protection en forme de sabot (29).

9. Pédale selon la revendication 8, **caractérisée par le fait que** le fond dudit sabot (29) présente un trou central (30).

10. Pédale selon l'une quelconque des revendications précédentes, **caractérisée par le fait que** ladite première paire d'arceaux (8) est en outre solidaire en rotation de ladite cage (22).
